# EUROPEAN PATENT APPLICATION

(11) **EP 3 141 664 A1**
(43) Date of publication of application: **15.03.2017**
(21) Application number: 15728619.6
(22) Date of filing: 05.05.2015
(51) Int. Cl.: E03B 7/04, F24D 17/00

(54) **WATER SAVING SYSTEM**

(30) Priority: 05.05.2014 PT 10762114
(71) Applicant: Magib Sociedade Imobiliária, S.A., 4795-784 Vilarinho (Santo Tirso) (PT)
(72) Inventor: DA CUNHA ABREU, Vitor Manuel, P-4795-784 Santo Tirso (PT); DOS SANTOS RIBEIRO FERREIRA, Joaquim André, P-4795-784 Santo Tirso (PT)
(74) Representative: Ferreira, Maria Silvina
(86) International application number: PCT/IB2015/053276
(87) International publication number: WO 2015/170254

(57) **Abstract**

The present application describes a water saving system comprising a water supply point (1), at least one check valve (2), a cooling/heating system (3), at least one water outlet point (4), at least one three-way valve (5) and at least one circulation pump (6).

The system avoids loss of energy and water to the sewage systems while the user-desired temperature is not reached, by means of a simple and easy to adapt system to the existing water supply networks.

## Description

### Technical domain

The present application describes a water saving system.

### Background

WO2004101902 discloses a water circulation system to be used in a factory, wherein it comprises a water collection point and an outlet drain of that same water to out of the factory. The system comprises switching means enabling the user to choose between water coming from recirculation system and water coming from the conventional power system, commonly referred to as tap water. However, the described system comprises the existence of an additional tank, which is not necessary with the system now presented in the present application.

CA2555940 describes a valve assembly that includes a structure having a water inlet, a warm water outlet, a cold water outlet, a tube passage for hot water flow between said water inlet and the hot water outlet, a passage pipe of the cold water flow between said water inlet and the cold water outlet and the means included in the structure that allow control of the hot to cold water passage at a given temperature. However, the described system further comprises the existence of an additional tank, which is not necessary with the system now presented in the present application.

PT103893 describes a water saving system for domestic use comprising a thermostatic 3-way valve, assembled on a piping circuit that allows water with a temperature below the predetermined temperature to return to said piping circuit to be heated in a water heater, without the waste of water that occurs at temperatures below the predetermined temperature. However, this system only allows a single exit point while with the system now disclosed is possible to have a system with the number of exit points desired by the user and with an interconnection between the mixer and the three-way thermostatic valve.

Thereby, one may conclude that there is no document and/or clue in the prior art, enabling the technical solution disclosed in this application.

### Summary

The present application describes a water saving system comprising the following elements:
- water supply point (1);
- at least one check valve (2);
- cooling/heating system (3);
- at least one water outlet point (4);
- at least one three-way valve (5);
- at least one circulation pump (6).

In one embodiment, the cooling/heating system of the water saving system is a water heater.

In another embodiment, the cooling/heating system of the water saving system is a cooling machine.

In yet another embodiment, the water saving system comprises at least one temperature sensor.

In one embodiment, the temperature sensor of the water saving system is included in the three-way valve.

In another embodiment, the water outlet point of the water saving system is a mixer tap.

In yet another embodiment, the circulating pump of the water saving system comprises at least one humidity sensor.

In one embodiment, the check valve of the water saving system is integrated in the circuit water supply point.

In another embodiment, the check valve of the water saving system is integrated immediately after each three-way valve.

In yet another embodiment, the water saving system comprises an interconnection between the three-way valve and each outlet point of water.

### General description

The present application describes a water saving system, which comprises the following elements:
- water supply point (1);
- at least one check valve (2);
- cooling/heating system (3);
- at least one water outlet point (4);
- at least one three-way valve (5);
- at least one circulation pump (6).

This system was developed to avoid loss of energy and water to the sewage systems while the user-desired temperature is not reached, by means of a simple system and with easy adaptability to existing water supply networks.

With this system it is possible a substantial reduction of the investment when compared to other systems known in the art, since it is a system easier to execute by excusing the existence of an intermediate tank, while still allowing its application to multiple water outlet points.

### Description of the figures

For an easier understanding of the invention are joined the attached figures, which represent preferred embodiments of the invention that, however, do not intend to limit the object of the present invention.

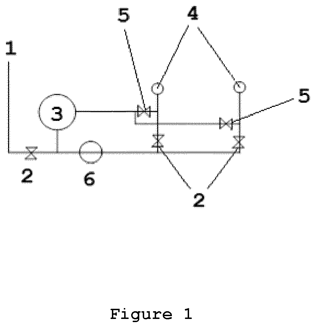

Figure 1 - Schematic representation of an embodiment of the water saving system, in which the reference numbers indicate:
1 - water supply point;
2 - check valve;
3 - cooling/heating system;
4 - water outlet point;
5 - three-way valve;
6 - circulation pump.

### Description of the embodiments

The present application describes a water saving system, which comprises the following elements:
- water supply point (1);
- at least one check valve (2);
- cooling/heating system (3);
- at least one water outlet point (4);
- at least one three-way valve (5);
- at least one circulation pump (6).

The water reaches the water saving system through the water supply point (1), which passes through the check valve (2), feeding the cooling/heating system (3), which may be for example a water heater or a cooling machine. Whenever the user wishes to obtain water from the system, the water from the cooling/heating system (3) outputs for the hot or cold water supply networks, where passes through at least one temperature sensor. Next to each water outlet point (4), which may be for example a mixer tap, and connected thereto, there is a three-way valve (5). If the water temperature is in accordance with the one intended by the user, the three-way valve (5) allows its output to the water outlet point (4). If the water temperature is not at the desired temperature by the user, according to the information collected by temperature sensor, the three-way valves (5) do not allow the release of water to the water outlet point (4), the circulation pump (6) being activated for the water to return to the cooling/heating system (3).

When the water outlet point (4) is closed the three-way valve (5) it has one open inlet and the other two outlets closed. When the user opens the water outlet point (4), the three-way valve (5) is activated and the water leaves by the water outlet point (4) as long as its temperature is appropriate to the desired. The evaluation of the water temperature may be carried out through at least one temperature sensor, which may be assembled, for example, on the three-way valve (5). The three-way valve should be thermostatic. The water then leaves through the water outlet point (4) and if it is not at the desired temperature it recirculates through the return system, returning to the cooling/heating system (3) until the desired temperature is reached. To enable this recirculation there is at least one circulation pump (6) that is only activated when there is water in the recirculation piping, which is detected by at least one moisture sensor. When the desired temperature is reached, the water flows out through the water outlet point (4) ready to be used.

The system comprises one check valve (2) in the supply of the network to the circuit and other after each three-way valve (5) in the connection to the return system. These check valves (2) ensure that the water is circulated only in the desired direction.

The system further comprises an interconnection between the three-way valve and the water outlet point so as to allow that only after the activation of that water outlet the three-way valve begins its normal functioning.

Whenever the water level decreases in the accumulation system the entry of water in the network is carried out directly. The water circulation system has privileged access with relation to the network water since the pressure given by the circulation pump (6) is greater than the pressure of the supply network.

This way, it is possible to save water that normally is lost to sewer systems when the user-desired temperature is not reached.

The present embodiment is not of course in any way restricted to the embodiments described herein and a person with ordinary skills in the area can provide many modification possibilities thereof without departing from the general idea, such as defined in the claims.

All embodiments described above can obviously be combined together. The following claims define further preferred embodiments.

## Claims

1. A water saving system comprised by the following elements:
- water supply point (1);
- at least one check valve (2);
- cooling/heating system (3);
- at least one water outlet point (4);
- at least one three-way valve (5);
- at least one circulation pump (6)

2. Water saving system according to the preceding claim, wherein the cooling/heating system is a water heater.

3. Water saving system according to claim 1, wherein the cooling/heating system is a cooling machine supplier.

4. Water saving system according to any one of the preceding claims, comprising at least one temperature sensor.

5. Water saving system according to the preceding claim, wherein the temperature sensor is included in the three-way valve.

6. Water saving system according to any one of the preceding claims, wherein the water outlet point is a mixer tap.

7. Water saving system according to any one of the preceding claims, wherein the circulation pump comprises at least one moisture sensor.

8. Water saving system according to any of the preceding claims, wherein the check valve is integrated in the circuit water supply point.

9. Water saving system according to any one of the preceding claims, wherein the check valve is integrated immediately after each three-way valve (5).

10. Water saving system according to any one of the preceding claims, comprising an interconnection between the three-way valve and each water outlet point.
